Europäisches Patentamt

European Patent Office

Office européen des brevets

(19)

(11) Veröffentlichungsnummer : **0 361 332 B1**

# (12) EUROPÄISCHE PATENTSCHRIFT

(45) Veröffentlichungstag der Patentschrift :
21.11.91 Patentblatt 91/47

(51) Int. Cl.⁵ : **F03B 13/00**

(21) Anmeldenummer : 89117571.3

(22) Anmeldetag : 22.09.89

(54) **Wasserarmatur, insbesondere für sanitäre Hausinstallationen.**

(30) Priorität : 27.09.88 CH 3581/88

(43) Veröffentlichungstag der Anmeldung :
04.04.90 Patentblatt 90/14

(45) Bekanntmachung des Hinweises auf die
Patenterteilung :
21.11.91 Patentblatt 91/47

(84) Benannte Vertragsstaaten :
AT CH DE FR IT LI

(56) Entgegenhaltungen :
WO-A-85/01337

(73) Patentinhaber : KWC AG
Hauptstrasse 130
CH-5726 Unterkulm (CH)

(72) Erfinder : Hochstrasser, Ferdinand F.
Bündtenweg 217
CH-5105 Auenstein (CH)

(74) Vertreter : Patentanwälte Schaad, Balass &
Partner
Dufourstrasse 101 Postfach
CH-8034 Zürich (CH)

## Beschreibung

Die vorliegende Erfindung betrifft eine Wasserarmatur, insbesondere für sanitäre Hausinstallationen, gemäss dem Oberbegriff des Anspruchs 1.

Eine solche Wasserarmatur ist beispielsweise aus der unter der Nummer WO 85/01337 veröffentlichten internationalen Patentanmeldung bekannt. Diese offenbart einen Wasserspender, dessen Wasserdurchfluss mittels eines elektrisch ansteuerbaren Ventils einschalt- bzw. abschaltbar ist. Im Strömungskanal des Wasserspenders ist bezüglich des Ventils stromaufwärts ein vom Wasser beaufschlagtes Turbinenrad angeordnet, welches einen elektrischen Generator kleiner Leistung antreibt. Der Generator ist mit einer das Ventil ansteuernden Steueranordnung verbunden, dessen Akkumulator mit der vom Generator gelieferten Energie aufladbar ist. Der im Querschnitt runde Strömungskanal des Wasserspenders weist eine Biegung vom 90° auf, bezüglich welcher stromaufwärts das Turbinenrad vorgesehen ist, wobei die Drehachse des Turbinenrades mit der Längsachse des den Strömungskanal in diesem Bereich begrenzenden Gehäuses zusammenfällt. Der Generator ist mit der Turbine fluchtend ausserhalb des Gehäuses im Bereich der 90°-Biegung vorgesehen, wobei im Gehäuse eine Ausnehmung für das Durchführen der mit der Abtriebswelle des Turbinenrades gekoppelten Generatorwelle vorgesehen ist. Zwischen dem Generator und dem Gehäuse des Wasserspenders ist ein durch die Ausnehmung im Gehäuse in den Strömungskanal vorstehendes hutförmiges Dichtelement eingeklemmt, das eine im axialer Richtung verlaufende Bohrung für die Abtriebswelle des Turbinenrades bzw. die Generatorwelle aufweist. Zwischen der inneren Mantelfläche des Dichtelementes und der Generatorwelle ist eine O-Ringdichtung vorgesehen, welche weiter in axialer Richtung an der inneren Stirnfläche des Dichtelementes und dieser gegenüber an einer an der Generatorwelle vorgesehenen Dichtscheibe ansteht. Diese Dichtungsanordnung führt im Vergleich zur kleinen Leistung der Turbine zu erheblichen Verlusten. Ueberdies ist sie einer Abnützung und Alterung ausgesetzt, was dazu führen kann, dass Wasser in das Innere des Generators eindringt.

Es ist daher Aufgabe der vorliegenden Erfindung, eine Wasserarmatur gemäss dem Oberbegriff des Anspruchs 1 zu schaffen, deren Verluste äusserst gering sind und deren Generator gegenüber dem Strömungskanal alterungsunabhängig zuverlässig abgedichtet ist.

Diese Aufgabe wird durch die Merkmale des kennzeichnenden Teiles des Anspruchs 1 gelöst.

Die Wasserarmatur weist keine mechanische Verbindung zwischen dem Turbinenrad und dem Generator auf, sondern es sind zwei Kupplungsteile vorgesehen, die durch einen nicht magnetisierbaren Wandteil, voneinander getrennt und durch ein den Wandteil durchdringendes Magnetfeld miteinander gekoppelt sind. Es ist somit keine Verluste erzeugende und der Alterung ausgesetzte dynamische Dichtung mehr notwendig.

Bei einer Ausführungsform gemäss Anspruch 2 weist mindestens der eine Kupplungsteil eine Permanentmagnetanordnung auf. Am anderen Kupplungsteil kann eine Elektromagnetanordnung oder auch einfach ein Teil aus Weicheisen vorgesehen sein, welcher dann vom von der Permanentmagnetanordnung erzeugten Magnetfeld mitgenommen wird.

In einer besonders bevorzugten Ausbildungsform mit guten Drehmomentübertragungseigenschaften auf kleinem Raum und einfachem Aufbau weisen beide Kupplungsteile je eine Permanentmagnetanordnung auf.

Eine besonders einfach Ausbildungsform der Wasserarmatur ist in Anspruch 5 angegeben, wobei besonders grosse Drehmomente übertragbar sind.

Ein wenige Teile umfassendes Aufbau der Wasserarmatur ist im Anspruch 6 angegeben.

Durch eine Ausbildungsform gemäss Anspruch 7 wird ermöglicht, dass das Wasser geradlinig durch die Wasserarmatur durchströmen kann.

Anspruch 8 definiert eine von elektrischer Fremdenergie unabhängige elektrische Wasserarmatur.

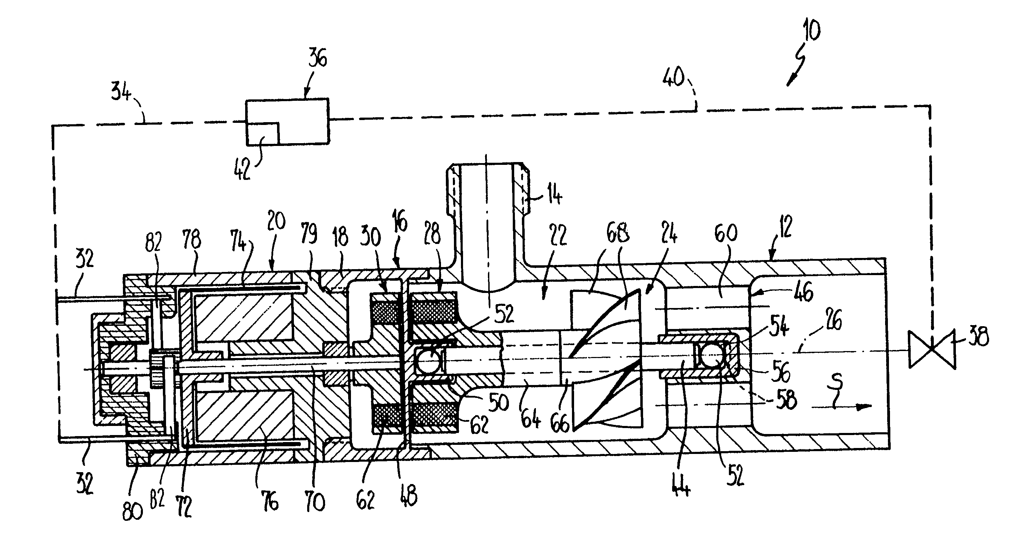

Die Erfindung wird nun anhand eines in der einzigen Figur schematisch dargestellten Ausführungsbeispiels näher beschrieben.

Die Wasserarmatur 10 weist einen im wesentlichen hohlzylindrischen Gehäuseteil 12, beispielsweise aus Messing, mit einem in radialer Richtung gegen aussen abstehenden Einlassstutzen 14 auf, welcher im einen Endbereich des Gehäuseteils 12 vorgesehen ist. Das einlassstutzenseitige Ende des Gehäuseteils 12 ist mit einem dünnwandigen Wandelement 16 aus einem nicht magnetisierbaren Material, beispielsweise aus Messing oder austenitischem rostfreiem Stahl, abgeschlossen. Das Wandelement 16 weist auf der dem Gehäuseteil 12 abgewandten Seite einen mit dem Gehäuseteil 12 fluchtenden, vorstehenden, hohlzylindrischen Rohrteil 18 auf, in welchen ein Gleichstrom-Generator 20 eingeschraubt ist.

Im Innern des Gehäuseteils 12, welcher einen Strömungskanal 22 für das durch den Einlassstutzen 14 zugeführte Wasser begrenzt, ist ein Turbinenrad 24 drehbar gelagert, dessen Drehachse 26 mit der Längsache des im wesentlichen hohlzylinderförmigen Gehäuseteils 12 zusammenfällt. Mit dem Turbinenrad 24 ist ein erster Kupplungsteil 28 drehfest verbunden, welcher im Bereich des Wandelementes 16 vorgesehen ist. Bezüglich dem Wandelement 16 dem ersten Kupplungsteil 28 gegenüberliegend ist ein zweiter Kupplungsteil 30 vorgesehen, welcher drehfest mit dem Generator 20 verbunden ist. Die beiden Kupplungsteile 28, 30 sind magnetisch miteinander gekoppelt, wie dies weiter unten näher beschreiben ist. Die beiden Anschlussklemmen 32 des Generators 20 sind, wie dies mit der gestrichelten Linie 34 angedeutet ist, mit einer Steueranordnung 36 verbunden, die ihrerseits mit einem, bezüglich der Strömungsrichtung S dem Gehäuseteil 12 nachgeschalteten, symbolisch dargestellten Ventil 38 mittels der ebenfalls gestrichelt dargestellten Verbindungsleitung 40 elektrisch gekuppelt ist. Die Steueranordnung 36 weist ein schematisch dargestelltes und mit 42 bezeichnetes Speicherelement, vorzugsweise einen Akkumulator, auf, welcher mit der vom Generator 20 gelieferten Energie aufladbar ist.

Wenn die Steueranordnung 36, beispielsweise von einem Näherungssensor her, ein Signal erhält, wird das Ventil 38 mittels der im Speicherelement 42 gespeicherten Energie geöffnet, wodurch das Wasser in Strömungsrichtung S zu fliessen beginnt. Das in Axialrichtung vom Wasser beaufschlagte Turbinenrad 24 beginnt zu drehen, wobei diese Drehung mittels den beiden Kupplungsteilen 28, 30 durch das Wandelement 16 hindurch an den Generator 20 übertragen wird. Mit der nun vom Generator 20 gelieferten Energie wird das Speicherelement 42 aufgeladen. Sobald die Steueranordnung 36 ein Signal für das Unterbrechen des Wasserflusses erhält, beispielsweise wiederum vom Näherungssensor, wird das Ventil 38 geschlossen, wonach das Turbinenrad 24 und somit auch der Generator 20 wieder zu Stillstand kommen.

Das Turbinenrad 24 und der erste Kupplungsteil 28 sitzen drehfest auf einer gemeinsamen Welle 44, die einerends im Bereich des ersten Kupplungsteils 28 am Wandelement 16 und andernends an einen im Innern des Gehäuseteils 12 angeordneten Lagerungswand 46 drehbar gelagert ist. Dazu weist die den Strömungskanal 22 abschliessende Trennwand 48 des Wandelementes 16 im Mittelbereich eine in das Innere des Gehäuseteils 12 vorstehende Lagerhülse 50 auf, deren Längsachse mit der Drehachse 26 des Turbinenrades 24 zusammenfällt. In der Lagerhülse 50 ist eine Lagerkugel 52 vorgesehen, an welcher sich die in die Lagerhülse 50 hineinreichende Welle 44 mit ihrem Ende in axialer Richtung abstützt. Die Lagerungswand 46 weist ein gegen das Turbinenrad 24 offenes Sackloch 54 auf, dessen Achse mit der Drehachse 26 zusammenfällt. In das Sackloch 54 ist eine hutförmige Lagerbüchse 56 aus Kunststoff eingesetzt, in welcher eine weitere Lagerkugel 52 vorgesehen ist, an welcher sich das andere Ende der Welle 32 axial abstützt. Der diesseitige Endbereich der Welle 44 ist in radialer Richtung von der Lagerbüchse 56 abgestützt. An der inneren Stirnseite der Lagerbüchse 56 kann eine gestrichelt angedeutete Hartmetallplatte 58 vorgesehen sein, um die Axialkräfte problemlos aufnehmen zu können. Um den Wasserdurchfluss nicht zu behindern, sind in der Lagerungswand 46 eine Vielzahl von in axialer Richtung verlaufenden Bohrungen 60 vorgesehen, welche kreisförmig um die Drehachse 26 angeordnet sind.

Im Bereich der Trennwand 48 ist der erste Kupplungsteil 28 scheibenförmig ausgebildet und umfasst, geringfügig beabstandet, die Lagerhülse 50. In diesem Bereich ist in den ersten Kupplungsteil 28 ein ringförmiger Permanentmagnet 62 eingelassen, der lateral auf der der Trennwand 48 zugewandten Stirnfläche magnetisiert ist. Im Bereich des Einlassstutzens 14 weist der erste Kupplungsteil 28 eine Verjüngung im Durchmesser auf, welche in einen zylindrischen Teil 64 übergeht, an welchem das Turbinenrad 24 anschliesst. Die genannte Verjüngung lenkt das durch den Einlassstutzen 14 in radialer Richtung zugeführte Wasser in die in axialer Richtung verlaufende Strömungsrichtung S um.

Das Turbinenrad 24 weist einen im wesentlichen zylinderförmigen Turbinenkörper 66 auf, welcher denselben Durchmesser aufweist, wie der zylindrische Teil 64 des ersten Kupplungsteils 28. Vom Turbinenkörper 66 stehen in radialer Richtung gegen aussen Turbinenschaufeln 68 ab, welche in axialer Richtung von strömenden Wasser beaufschlagt sind.

Der auf der Rotorwelle 70 des Generators 20 sitzende zweite Kupplungsteil 30 ist ebenfalls scheibenförmig ausgebildet, wobei die der Trennwand 48 zugewandte Stirnseite parallel zur Trennwand 48 verläuft. Der zweite Kupplungsteil 30 weist ebenfalls einen hohlzylinderförmigen Permanentmagneten 62 auf, der ebenfalls lateral auf seiner der Trennwand 48 zugewandten Stirnfläche magnetisiert ist. Solche Permanentmagnete 62 sind allgemein bekannt und beispielsweise unter dem Namen "FERROXDURE" von der Firma Philips erhältlich.

Beim Generator 20 handelt es sich um einen als Generator betriebenen DC-Micromotor, System Faulhaber, wie er von der Firma MINIMOTOR SA, Agno, Schweiz, hergestellt und verkauft wird. Auf der Rotorwelle 70 sitzt eine Kommutatorplatte 72, welche eine zylinderförmige, schräg gewickelte Rotorspule 74 trägt. Innerhalb der Rotorspule 74 ist ein ortsfest angeordneter, lateral auf dem Umfang magnetisierter Erregermagnet 76 vorgesehen, dessen Magnetfeld die Rotorspule 74 durchdringt und über eine hohlzylinderförmige Weicheisenhülse 78 rückgeschlossen ist. Die Weicheisenhülse 78 ist auf der dem Wandelement 16 zugewandten Seite mit einem Halteflansch 79 verbunden, welcher in den Rohrteil 18 eingeschraubt ist und an welchem die Rotorwelle 70 gelagert ist. In die Weicheisenhülse 78 ist auf der andern Seite ein Kunststoffdeckel 80 zapfenförmig eingesteckt, an welchem die Rotorwelle 70 ebenfalls drehbar gelagert ist und von welchem die Bürsten 82 gehalten sind. Die Bürsten 82 sind elektrisch mit den Anschlussklemmen 32 verbunden. Anstelle des hier gezeigten und beschriebenen DC-Micromotores kann selbstverständlich jeder geeignete Motor bzw. Generator eingesetzt werden. Neben einem sehr hohen Wirkungsgrad weist der vorgeschlagene Generator 20 ein äusserst kleines Massenträgheitsmoment auf, was zu besonders guten Anlaufeigenschaften und somit zur Erzeugung von Energie schon bei kleinen Durchflussgeschwindigkeiten des Wassers führt.

Um das Wasser nicht umlenken zu müssen, ist es auch denkbar, dass der erste Kupplungsteil am Turbinenrad selber ausgebildet ist. So wäre es möglich, dass ein ringförmiger Permanentmagnet in Umfangsrichtung die Turbinenschaufeln umgreift. Der zweite Kupplungsteil könnte in diesem Fall koaxial um das Gehäuse herum angeordnet und beispielsweise an diesem drehbar gelagert sein, wobei das Gehäuse mindestens im Bereich der beiden Kupplungsteile aus einem nicht magnetiserbaren Material besteht. Die Drehbewegung des Turbinenrades würde dann auf den zweiten Kupplungsteil durch die Gehäusewand hindurch übertragen werden, wobei diese Drehbewegung beispielsweise mittels eines Getriebes vom zweiten Kupplungsteil an einen Generator übertragen werden kann.

Die von einer fremden elektrischen Energiequelle unabhängige Wasserarmatur kann mehrere von der Steueranordnung angesteuerte Ventile aufweisen. Es können aber auch Temperaturmessonden oder Anzeigen, beispielsweise für die Temperatur vorgesehen sein, welche allesamt vom durch den Generator aufgeladenen Speicherelement gespiesen sind. So ist es insbesondere auch denkbar, dass die Wasserarmatur als Mischarmatur ausgebildet ist und ein für das Warmwasser und ein für das Kaltwasser regelbares Ventil aufweist und die Zuflussmenge des betreffenden Wassers in Abhängigkeit von der mit einem Temperatursensor gemessenen Mischwassertemperatur geregelt wird. Das Turbinenrad ist dann entweder vom Mischwasser, vom Kaltwasser oder vom Warmwasser angetrieben.

Selbstverständlich können an den Kupplungsteilen 28, 30 anstelle der ringförmigen Permanentmagnete 62 auch andere, beispielsweise stabförmige, Permanentmagnete vorgesehen sein.

## Patentansprüche

1. Wasserarmatur, insbesondere für sanitäre Hausinstallationen, mit einem Strömungskanal, mit einem in diesem angeordneten und vom durchströmenden Wasser beaufschlagten Turbinenrad und mit einem vom Turbinenrad angetriebenen, gegenüber dem Strömungskanal abgedichteten, elektrischen Generator, dadurch gekennzeichnet, dass ein den Strömungskanal (22) vom Generator (20) abtrennender Wandteil (48) aus einem nicht magnetisierbaren Material vorgesehen ist, dass auf der einen Seite des Wandteils (48) ein mit dem Turbinenrad (24) und auf der andern Seite ein mit dem Generator (20) verbundener Kupplungsteil (28, 30) angeordnet sind und die Kupplungsteile (28, 30) magnetisch miteinander gekuppelt sind.

2. Wasserarmatur nach Anspruch 1, dadurch gekennzeichnet, dass mindestens der eine Kupplungsteil (28, 30) eine Permanentmagnetanordnung (62) zum Erzeugen eines den Wandteil (48) durchdringenden Magnetfeldes aufweist und der andere Kupplungsteil (30, 28) über das Magnetfeld mit diesem gekuppelt ist.

3. Wasserarmatur nach Anspruch 2, dadurch gekennzeichnet, dass beide Kupplungsteile (28, 30) je eine Permanentmagnetanordnung (62) aufweisen.

4. Wasserarmatur nach einem der Ansprüche 1 bis 3, dadurch gekennzeichnet, dass die Drehachsen (26) des Turbinenrades (24) und des Generators (20) miteinander fluchten und der Wandteil (48) im wesentlichen senkrecht zu diesen Drehachsen (26) verläuft.

5. Wasserarmatur nach Anspruch 4, dadurch gekennzeichnet, dass die auf jeder Seite des Wandteils (48) vorgesehenen Kupplungsteile (28, 30) scheibenförmig ausgebildet und zum Wandteil (48) im wesentlichen parallel angeordnet sind.

6. Wasserarmatur nach Anspruch 5, dadurch gekennzeichnet, dass vorzugsweise beide Kupplungsteile (28, 30) einen zylindrischen oder hohlzylindrischen, lateral auf der dem Wandelement (48) zugewandten Stirnfläche magnetisierten Permanentmagneten (62) aufweisen.

7. Wasserarmatur nach Anspruch 1, dadurch gekennzeichnet, dass der Wandteil rohrförmig und koaxial zur gemeinsamen Drehachse der Kupplungsteile ausgebildet ist, und dass eine radiale magnetische Kopplung zwischen den Kupplungsteilen vorgesehen ist.

8. Wasserarmatur nach einem der Ansprüche 1 bis 7, dadurch gekennzeichnet, dass der Generator (20) mit einer elektrischen Steueranordnung (36) verbunden ist, die ein mit der vom Generator (20) erzeugten Energie aufladbares Speicherelement (42), vorzugsweise einen Akkumulator, aufweist, und dass eine mittels der Steueranordnung (36) elektrisch steuerbare Ventilanordnung (38) für die Regulierung des Wasserdurchflusses vorgesehen ist.

9. Wasserarmatur nach einem der Ansprüche 1 bis 8, dadurch gekennzeichnet, dass am Wandteil (48) zum drehbaren Lagern des Turbinenrades (24) und des zugeordneten Kupplungsteils (28) ein Lagerelement (50) angeordnet, vorzugsweise angeformt ist.

## Claims

1. A water appliance, in particular for domestic sanitary installations, with a flow duct, with a turbine wheel arranged therein and acted on by water flowing through and with an electric generator driven by the turbine wheel and sealed against the flow duct, characterized in that provision is made for a wall component (48) made of a nonmagnetizable material separating the flow duct (22) from the generator (20), in that coupling members (28, 30) are arranged, respectively connected on one side of the wall component (48) to the turbine wheel (24) and on the other side to the generator (20), and that the coupling members (28, 30) are magnetically coupled to each other.

2. A water appliance according to claim 1, characterized in that at least one coupling member (28, 30) has a permanent magnet arrangement (62) for generating a magnetic field passing through the wall component (48) and that the other coupling member (30, 28) is coupled thereto via the magnetic field.

3. A water appliance according to claim 2, characterized in that both coupling members (28, 30) have a permanent magnet arrangement (62) each.

4. A water appliance according to one of claims 1 to 3, characterized in that the axes of rotation (26) of the turbine wheel (24) and of the generator (20) are aligned with each other and that the wall component (48) extends substantially perpendicular to these axes of rotation (26).

5. A water appliance according to claim 4, characterized in that the coupling members (28, 30) provided on each side of the wall component (48) have a disk-shaped design and are arranged substantially parallel to the wall component (48).

6. A water appliance according to claim 5, characterized in that preferably both coupling members (28, 30) have a cylindrical or hollow cylindrical permanent magnet (62) magnetized laterally on the front side facing the wall component (48).

7. A water appliance according to claim 1, characterized in that the wall component is designed to be tubular and coaxial with the common axis of rotation of the coupling members and that provision is made for a radial magnetic coupling between the coupling members.

8. A water appliance according to one of claims 1 to 7, characterized in that the generator (20) is connected to an electric control unit (36) having a storage element (42), preferably an accumulator, chargeable with the energy produced by the generator (20) and that for regulating the water flow, provision is made for a valve arrangement (38) electrically controllable by means of the control unit (36).

9. A water appliance according to one of claims 1 to 8, characterized in that for the rotational mounting of the turbine wheel (24) and of the associated coupling member (28), a bearing element (50) is arranged on the wall component (48) being preferably formed-on.

## Revendications

1. Robinetterie à eau, en particulier destinée à des installations domestiques sanitaires, comportant un canal d'écoulement, une roue de turbine disposée dans celui-ci et frappée par l'eau qui le traverse et un générateur électrique, entraîné par la roue de turbine, disposé de façon étanche par rapport au canal d'écoulement, caractérisée en ce qu'il est prévu une partie (48) de paroi séparant du générateur (20) le canal d'écoulement (22), en matière non magnétisable, en ce que sont disposés, sur un premier côté de la paroi (48) de séparation un élément d'accouplement (28) accouplé à la roue turbine (24) et sur l'autre côté un élément d'accouplement (30) accouplé avec le générateur (20), et en ce que les éléments d'accouplement (28, 30) sont accouplés entre eux de façon magnétique.

2. Robinetterie à eau selon la revendication 1, caractérisée en ce qu'au moins un des éléments d'accouplement (28, 30) comporte un dispositif à aimants permanents (62) pour engendrer un champ magnétique traversant la partie de paroi (48) et en ce que l'autre élément d'accouplement (30, 28) est accouplé au précédent, au moyen du champ magnétique.

3. Robinetterie a eau selon la revendication 2, caractérisée en ce que les deux éléments d'accouplement (28, 30) comportent chacun un agencement d'aimant permanent (62).

4. Robinetterie à eau selon l'une quelconque des revendications 1 à 3, caractérisée en ce que les axes de rotation (26) de la roue de turbine (24) et du générateur (20) sont alignés entre eux et en ce que la partie de paroi (48) est disposée sensiblement perpendiculairement à cet axe de rotation (26).

5. Robinetterie à eau selon la revendication 4, caractérisée en ce que les éléments d'accouplement (28, 30) prévus sur chaque côté de la partie de paroi (48) sont réalisés mous forme de disques et sont disposés sensiblement en parallèle à cette partie (48).

6. Robinetterie à eau selon la revendication 5, caractérisée en ce que de préférence les deux éléments d'accouplement (28, 30) présentent un aimant permanent (26), cylindrique ou en forme de cylindre creux, disposé latéralement sur la face frontale tournée vers l'élément de paroi (48).

7. Robinetterie à eau selon la revendication 1, caractérisée en ce que la partie de paroi est réalisée de façon tubulaire et coaxiale à l'axe commun de rotation des éléments d'accouplement et en ce qu'un accouplement magnétique radial est prévu entre les parties d'accouplement.

8. Robinetterie à eau selon l'une des revendications 1 à 7, caractérisée en ce que le générateur (20) est relié à un dispositif de commande électrique (36) qui comporte un élément d'accumulation (42), de préférence un accumulateur, qui peut être chargé à l'aide de l'énergie engendrée par le générateur (20) et en ce qu'il est prévu, pour la régulation du débit d'eau, une soupape (38) qui peut être commandée électriquement au moyen de ce dispositif de commande (36).

9. Robinetterie à eau selon l'une des revendications 1 à 8, caractérisée en ce qu'un élément de palier (50) est dispose, de préférence conformé, sur la partie de paroi (48) en vue d'un logement à rotation de la roue de turbine (24) et de l'élément d'accouplement associé (28).

EP 0 361 332 B1